(19)

Europäisches
Patentamt
European
Patent Office
Office européen
des brevets

(11) **EP 1 879 064 A1**

(12) **EUROPEAN PATENT APPLICATION**

(43) Date of publication:
**16.01.2008 Bulletin 2008/03**

(51) Int Cl.:
***G02C 7/04*** *(2006.01)*

(21) Application number: **06116967.8**

(22) Date of filing: **11.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Procornea Nederland B.V.**
**6961 LZ Eerbeek (NL)**

(72) Inventor: **Wanders, Bernardus Franciscus Maria**
**6986 AH, Angelo (NL)**

(74) Representative: **van Westenbrugge, Andries**
**Nederlandsch Octrooibureau**
**Postbus 29720**
**2502 LS Den Haag (NL)**

(54) **Contact lens**

(57) The invention relates to a contact lens comprising at least one area with an increased friction for an eyelid for providing grip to the eyelid for positioning the contact lens on an eye in use, wherein said friction area comprises micro scale undulations for providing friction between an eyelid and the contact lens.

EP 1 879 064 A1

**Description**

**Background**

The present invention relates to a contact lens, in particular a contact lens for which the position or the orientation on the eye is of importance.

In particular soft contact lenses have solved some of the problems that patients have experienced in not being able to wear rigid gas permeable (RGP) contact lenses, or in not being able to wear them for a longer period of time, because of initial discomfort.

Bifocal and multi focal soft lenses are mostly used by people reaching the 40+ age and have a need for a reading addition into their contact lenses, so called presbyopic patients Many multi focal lens designs are on the market nowadays but so far with very limited success, due to the fact that a soft lens is not moving on the eye like a RGP lens and therefore the small optic central part of the lens has to be a optical everything in one design, causing blurred vision and lost of contrast.

The most successful design for presbyopic patient is a translating bifocal design. Such a design is known from patent EP 0 858 613 B1 by applicant, and is incorporated herein by reference. This design is marketed as RGP and soft lens with very good results since 1996. For such a design as soft contact lens it is necessary to have a good vertical translation of the lens when the eye changes from primary (horizontal) direction of view to downward direction of view.

In addition, orientation stabilisation and/or translating features are incorporated into soft toric or translating bifocal contact lenses to avoid rotation onto the eye. Examples of such orientation stabilizing and/or translating features, including prism ballast which is generally a base-down prism to increase weighting effect to orient the lens and to create a ridge which should engage with the lower eyelids to provide vertical translation or rotation stabilisation support, are for example mentioned in US 4573775A1 (Bayshore), US 4854089A1 (Morales), US 5071244A1 (Ross Richard), EP 0452549A1 (Woehlk), EP 0858613A1 (Procornea), WO 9923527A1 (Bernstein), WO 0214929A1 (Novartis), WO 2004011989A1 (Novartis), WO 2004068214A1 (Novartis), WO 2004092805A1 (Novartis), WO 2004104675A2 (Novartis), WO 2006013101A2 (Novartis), US 2005099595A1 (Novartis) and US 4324461A1 (Salvatores). All these designs have in common a ridge or ramped ridge to translate the soft lens upwards when the eye changes from primary gaze to downward gaze in order to bring the correct optical part in front of the pupil.

In WO-2004/104675, a so-called soft contact lens having a special optical area for correcting presbyopia is disclosed. In order to keep this optical part correctly oriented, this contact lens has a ramped ridge at its lower (during wearing) part. This ramped ridge is designed to have the lower lid of the eye keep the lens at its position while the eye ball goes down when for instance reading a book. In this way, the lower part of the lens with a presbyopia-corrective optical part moves in front of the pupil, allowing a wearer to read. The positioning of this contact lens, however, can be improved.

One problem not solved by any of the above cited documents is the fact that elderly people very often have weak, loose eyelids. When the eye changes to downward gaze, a ridged lens easily slips away under the eyelid without performing the necessary translation to be able to read with the lenses. Especially a lens having the entire ramped ridge zone as mentioned in WO-2004/011989 (Novartis) is not beneficial since the entire ramped ridge is continuous in the first derivative and or in the second derivative giving the ridge of the lens a good change to slip under the lower eyelid.

In EP 0589959, specific wave patterns are described to stabilize the lens in a certain position to align a toric contact lens. These patterns are provided on the upper part of the contact lens or inclined next to the optical zone of the contact lens. The patterns are intended to rotationally stabilize the contact lens on the eye of a wearer in a certain rotational position. In particular, in this contact lens, the upper eyelid should influence the contact lens. The specific wave pattern and its location, however, are not optimal for other types of contact lenses.

**Summary of the invention**

The invention aims to improve positioning of a contact lens on the eye, and maintaining this positioning during wear.

Another object of the invention is to improve the comfort of such a contact lens.

Yet another object of the invention is to provide such a contact lens which is easy to produce.

Another object of the invention is to improve positioning of the contact lens for older people.

Yet another object of the invention is to provide a contact lens which is able to translate on the eye of a wearer during use via the lower eyelid.

According to the invention at least a part of these objectives is realized with a contact lens comprising at least one area with an increased friction for an eyelid for providing grip to the eyelid for positioning the contact lens on an eye in use, wherein said friction area comprises micro scale undulations for providing friction between an eyelid and the contact lens.

This provides the possibility of designing a contact lens which has a position behaviour which can be designed accurately, and with a behaviour which can be predicted and engineered.

In an embodiment, the contact lens according to the invention comprises a central optical zone and a radially outer zone surrounding the central optical zone and having optical properties different from the central optical zone, and a ridge radially outside said outer zone.

In an embodiment said friction area is provided at the location of said ridge.

In an embodiment said friction area is provided in or on said ridge.

In an embodiment said friction areas are provided at the location of said ridge and at both sides of a mirror line on said contact lens.

In an embodiment the friction area or areas are provided on a side of the ridge radially away from the centre of the contact lens.

In an embodiment said contact lens has an inner surface resting on an eye during wearing and an outer surface, said friction area being provided on said outer surface.

In an embodiment said friction area or areas comprise a two-dimensional undulation. These undulations can for instance be two-dimensional sinusoid, in an embodiment having an amplitude of about 1-5 micron an a wavelength of about 50-200 micron. This should be enough to provide a better grip or friction for an eyelid, but avoid irritation or build-up of dirt.

In an embodiment said contact lens has prismatic optics.

The invention further relates to a contact lens comprising a central optical zone and a radially outer zone surrounding the central optical zone, and a ramped ridge in the radially outer zone, wherein said ridge comprises at least one interruption for allowing tear moisture to flow away.

In an embodiment, one of said at least one interruptions is provided substantially at the middle of said ridge.

The invention further relates to a contact lens comprising a central optical zone and a radially outer zone surrounding the central optical zone, and at least two elevations in the outer zone at both sides of a mirror line of said contact lens.

Various aspects of this invention described in this document may also be the subject of divisional applications.

The various aspects discussed in this patent can be combined in order to provide additional advantageous advantages.

**Description of the drawings**

The invention will be further elucidated referring to embodiments shown in the drawing wherein shown in:

Fig. 1 a first embodiment of a contact lens of the invention in an eye;
fig. 2 a SEM picture of a machined friction area;
fig. 3 an example of a sinusoid surface;
fig. 4 a further embodiment of a contact lens of the invention in an eye;
fig. 5 a further embodiment of a contact lens of the invention in an eye;
fig. 6 another embodiment of a contact lens of the invention in an eye;
fig. 7 a cross-section VII-VII of a contact lens of figure 1;
fig. 8 an enlarged detail of figure 4;
fig. 9 a cross-section IX-IX of fig. 4;
fig. 10 a contact lens of the invention in side view and partial cross section;
fig. 11 another contact lens of the invention in side view and partial cross section;
fig. 12 a detail of an embodiment of figure 11;
fig. 13 a detail of another embodiment of figure 11;
fig. 14 a detail of another embodiment of figure 11;

**Detailed description of embodiments**

In this description of embodiments, similar reference numbers are used to indicate similar features throughout the embodiments.

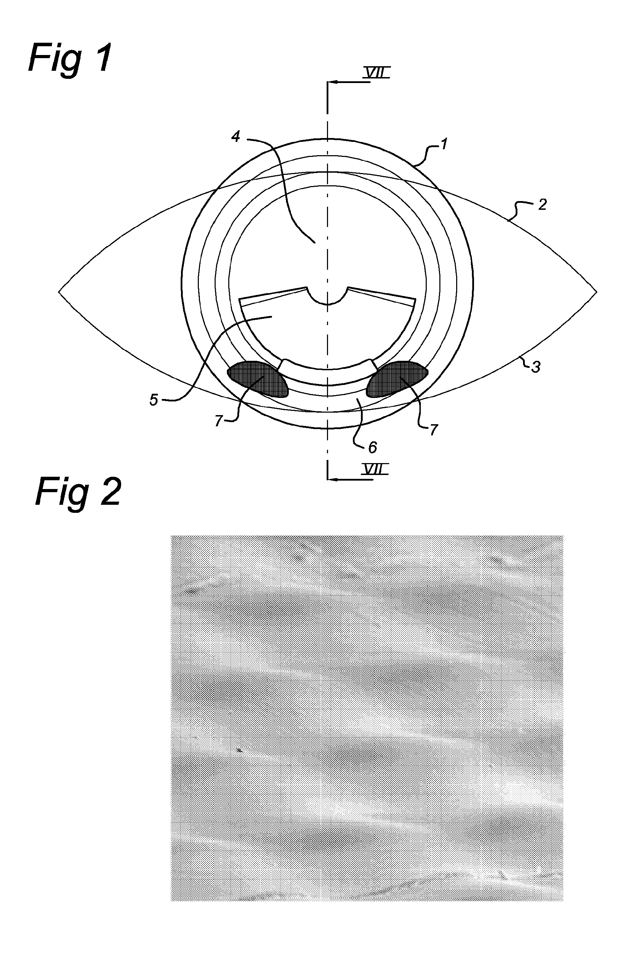

Figure 1 shows a first embodiment of a contact lens 1 on an eye with upper eyelid 2 and lower eyelid 3. Contact lens 1 has an optical zone with a central optical zone 4 and a presbyopia correcting further optical zone 5 radially outside the central optical zone.

Around the further optical zone 5, contact lens 1 has a ramped ridge 6 which has several friction areas 7 on the ridge below the further optical zone 5.

Figure 2 shows an example of a friction area according to the invention, in which a SEM picture is shown of a friction area which has a sinusoid surface with an amplitude of at least 2.5 $\mu$m and a wavelength of about 70 $\mu$m in both the x- and y-directions. The sinusoids in this embodiment have sub-$\mu$m form accuracy with a surface finish on the order of 100 nm. These types of sinusoidal surfaces can be machined using a single point diamond tool with a commercial fast tool servo on a diamond turning machine. For example Machining could be performed with a Precitech Nanoform 200 or Contamac DiaTop diamond turning machine. In these types of machines, the work piece is mounted on the spindle of the machine tool and rotates clockwise. A Fast Tool Servo system is mounted on the tool slide and is oriented so that its stroke is parallel to the z-axis, perpendicular to the face of the work piece. A single point diamond cutting tool is mounted in the fast tool servo, and the height of the cutting edge is carefully set so that it cuts to the center of the work piece. To machine the surface of the work piece, the machine spindle (the C-axis) rotates the work piece clockwise, and the motion of the x-axis moves the diamond tool relative to the work piece such that the tool travels from right to left relative to the work piece, from the outer edge toward the center of rotation. The stroke of the fast tool servo is slaved to the C-axis and the x-axis, both of which contain high resolution encoders that constantly read the angular orientation of the machine spindle, $\theta$, and the distance of the diamond tool tip from the axis of rotation of the machine spindle, r. In other words, the fast tool servo is programmed so that its stroke is a function of the encoder readings, $\theta$ and r. and the tool path is three Dimensional (3D) corrected.

A desired form of the surface machined by the fast tool servo is given by Eq. (1), where the amplitude, A, is 2.5 $\mu$m, and the wavelength, $\lambda$, is 70 $\mu$m. In Eq. (1), x and y lie in the work piece coordinate system. r and $\theta$ lie in the machine tool coordinate system, where r corresponds to the x-axis of the machine tool and $\theta$ corresponds to the C-axis of the machine tool

$$(1) \quad z = A\sin\left(\frac{2\pi x}{\lambda}\right)\sin\left(\frac{2\pi y}{\lambda}\right) = A\sin\left(\frac{2\pi r\cos\theta}{\lambda}\right)\sin\left(\frac{2\pi r\sin\theta}{\lambda}\right)$$

To produce a desired form of the machined work piece surface, the fast tool servo preferably is programmed to account for the finite nose radius of the cutting tool.

Characteristics of a slip off resistance surface structure according to the invention are:

- Knurled but not rough in a sense that the structured surface could irritate the sensitive membrane at the inside of the eyelid.
- Height and width of the structure is variable to give maximum slip off resistance
- Structure could be raised or recessed
- Size and place could be anywhere on the lens, outside the optical zone.
- The size width and structure of the knurled surface could be varied for different locations. For instance at the bottom part less resistance and at a higher part (direction top of the lens) more resistance to have a controlled movement or stabilisation.
- The structure could be in the shape of a so called Lotus texture. So it has a self cleaning micro texture to reduce deposits on the structured area.
- Structure could be manufactured either on the lens or on a optical mould insert used for cast moulding or spin casting.
- Structure could be manufactured by means of:

    o Single point diamond turning
    o Laser ablation
    o EDM (Electric Discharge Machining)
    o Micro sandblasting

- Lens could be manufactured by means of:

    o Single point diamond cutting
    o Cast moulding or spin casting

The surface structure is not limited to a sinoid surface but could be of any type suitable to increase the slip-off resistance needed to help the lens translating or rotation stabilisation during the eye movement when the eye changes to downward gaze.

Characteristic of a bifocal lens with stabilisation according to the invention, additional to what already has been disclosed in EP0858613A1 (Procornea):

- Distance part continuous in the lower part circular between 1 and 2.2 mm below centre.
- At the lower part of the peripheral stabilisation a recess with a depth near to the level off the distance part to avoid the build up off a tear meniscus who could disturb the vision quality.
- The lens could be a toric lens, toric multifocal, toric bifocal.

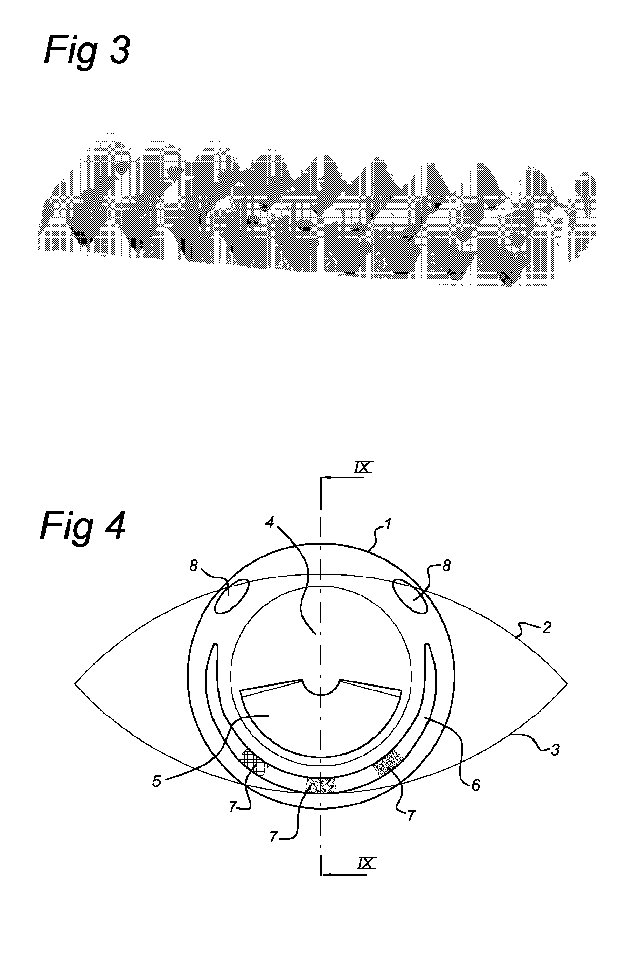

Fig. 4 shows a further embodiment of a contact lens 1 on an eye with upper eyelid 2 and lower eyelid 3. Contact lens 1 has an optical zone with a central optical zone 4 and a presbyopia correcting further optical zone 5 radially outside the central optical zone.

At the lower portion, outside the further optical zone 5 in the outer radial area, contact lens 1 has a ramped ridge 6 which has several friction areas 7 on the ridge below the further optical zone 5.

This contact lens is further provided with two additional elevated areas 8 that preferably are dome-shaped and smoothly extend from the surface of the contact lens 1. These areas are situated on the upper half of the contact lens 1.

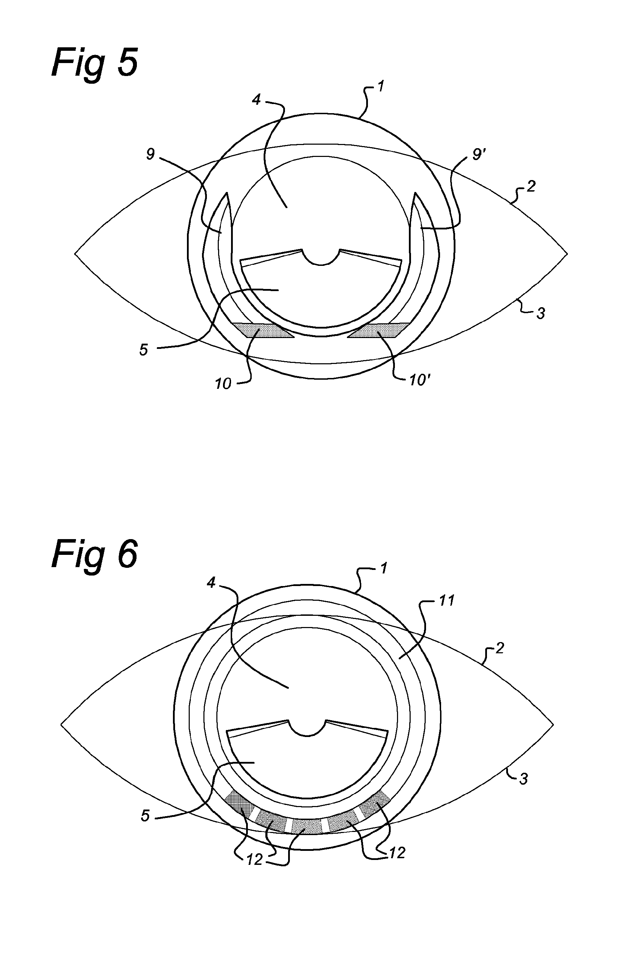

Fig. 5 shows another embodiment of a contact lens 1 according to the invention. This contact lens 1 has two ridges 9, 9' at both sides of a mirror line through contact lens 1. These two ridges extend concentrically over a least part of the circumference of the contact lens, outside the optical zone. At the lower part where the ridges start, friction areas 10, 10' are provided. The space between the two ridges 9 allows eye fluid to leave the lens and not build up in the optical areas 4, 5. In cross section, the ridges 9, 9' preferably have a smooth, continuous slope.

Figure 6 shows another embodiment of a contact lens 1 with a fully circumferential ridge 11. On this ridge, several friction areas 12 are provided.

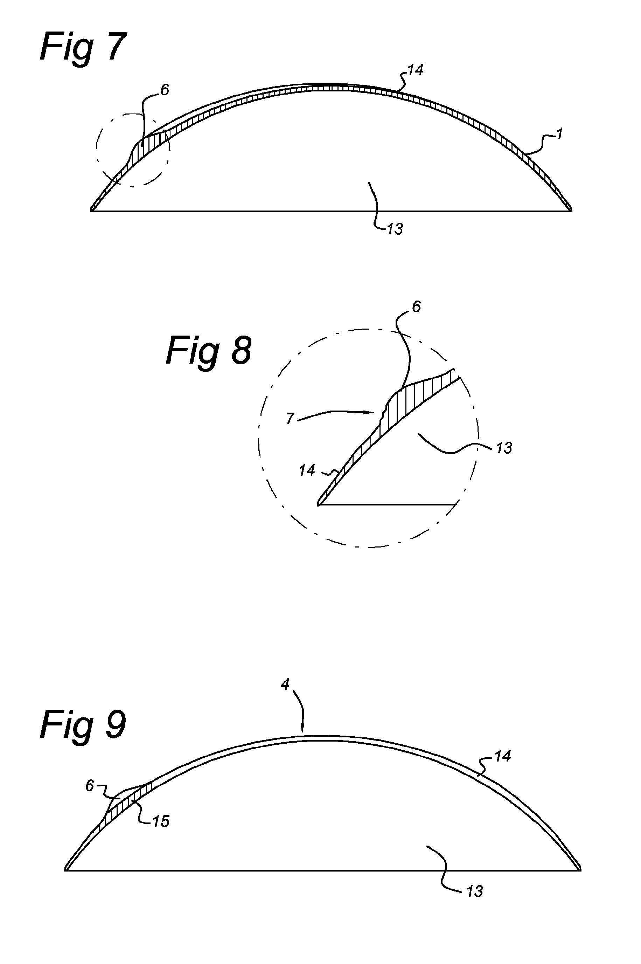

Figure 7 shows a cross section through the lens of figure 6. The contact lens 1 has a concave inner surface 13 which during wearing floats on an the eye, and an outer surface 14. In this cross section the ridge 6 is indicated. In this embodiment the contact lens is not prismatic: at the optical area side of the ridge, the ridge slopes downward and the contact lens has its normal thickness. In a prismatic lens, the thickness of the contact lens would from the top of the ridge would decrease slowly until the current thickness would be reached at the other side (where numeral 1 is placed) of the lens.

In this figure 7 it is furthermore indicated that the height of the ridge is maximal at the lower side of the contact lens, and slowly decreases to about zero at the upper side (where numeral 1 is placed).

In figure 8 a detail of the ridge-part of figure 7 is shown. This ridge 6 has a smooth, continuous contour and smoothly extends from the general outer surface 14 of the contact lens 1. Clearly shown is the friction area 7 in cross section, showing the wavelets which were here made in the surface of the ridge, at a location which is radially away from the optical zone. With a so called soft contact lens which has a diameter larger then the iris of an eye, the ridge is not situated at the edge of the contact lens, but more radially towards the centre of the contact lens, as is shown in this fig. 8. Furthermore, this figure shows that the amplitude of the micro undulations is very small, in the range of about 1-5 micron, and preferably 2-3 micron. Its wavelength is about 40-200 micron, preferably 60-80 micron. Then slope preferably is continuous in order to prevent dirt to build up and to avoid irritation of the eye.

Figure 9 shows a cross section of a contact lens 1 generally according to the contact lens of figure 5, which has an interruption 15 in the ridge 6 centrally below the central optical zone 4.

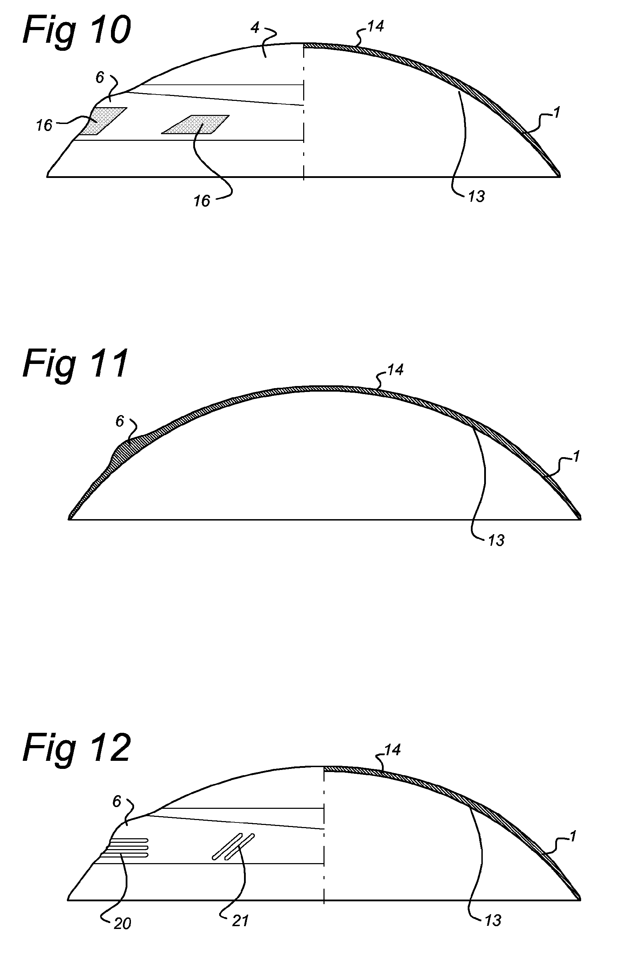

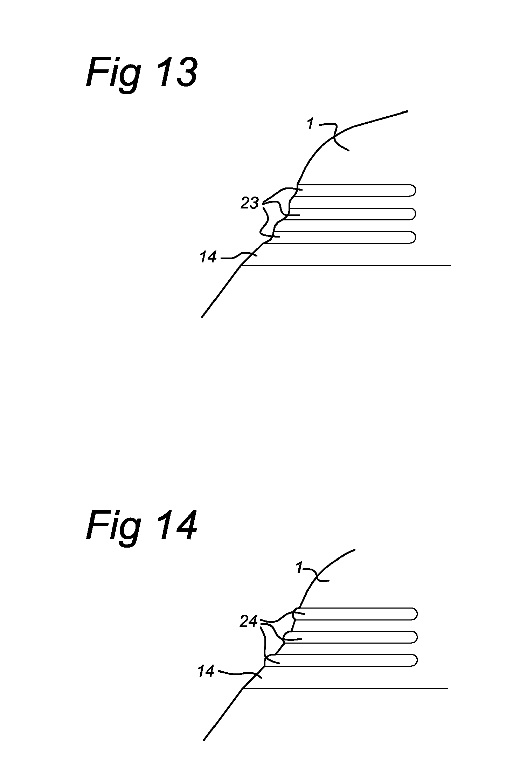

Figure 10 shows a contact lens according to the invention which has a ridge 6 and friction areas 16 having a two-dimensional sinusoid profile. Examples of such a profile are shown in figures 13 and 14.

Figure 11 shows a cross section through a contact lens 1 of figure 1 with a ridge 6.

In figure 12 alternative friction areas 20 and 21 are shown. Friction area 20 has a profile of substantially parallel waves which run perpendicular to the radial direction, substantially in circumferential direction.

Friction area 21 has a profile which is at an angle with respect to the radial direction and the circumferential direction. This placement allows the eyelid to properly position the lens both in radial position and in height on the eye.

Figures 13-14 show various embodiments of a wave pattern according to the invention and used in figure 10. In these figures, the waves are substantially parallel waves. These waves are in figure 13 below the general surface and in a fully sinusoid pattern. In figure 14 the waves are above the general surface of the contact lens, and between each wave 24 there is a flat region.

It will also be obvious after the above that further embodiments are within the scope of protection of the appended claims being obvious combinations with prior art techniques and the disclosure of this patent.

## Claims

1. Contact lens comprising at least one area with an increased friction for an eyelid for providing grip to the eyelid for positioning the contact lens on an eye in use, wherein said friction area comprises micro scale undulations for providing friction between an eyelid and the contact lens.

2. Contact lens according to claim 1, comprising a central optical zone and a radially outer zone surrounding the central optical zone and having optical properties different from the central optical zone, and a ridge radially outside said outer zone.

3. Contact lens according to claim 3, wherein said friction area is provided at the location of said ridge.

4. Contact lens according to claim 3 or 4, wherein said friction area is provided in or on said ridge.

5. Contact lens according to any one of said claims 3-4, comprising two of said friction areas provided at the location of said ridge and at both sides of a mirror line on said contact lens.

6. Contact lens according to any one of the preceding claims 3-5, wherein the friction area or areas are provided on a side of the ridge radially away from the centre of the contact lens.

7. Contact lens according to any one of the preceding claims, having an inner surface resting on an eye during wearing and an outer surface, said friction area being provided on said outer surface.

8. Contact lens according to any one of the preceding claims, wherein said friction area or areas comprise a 3D undulation, preferably a sinusoid.

9. Contact lens according to any one of the preceding claims, wherein said contact lens has prismatic optics.

10. Contact lens comprising a central optical zone and a radially outer zone surrounding the central optical zone, and a ramped ridge in the radially outer zone, wherein said ridge comprises at least one interruption for allowing tear moisture to flow away.

11. Contact lens according to claim 9, wherein one of said at least one interruption is provided substantially at the middle of said ridge.

12. Contact lens comprising a central optical zone and a radially outer zone surrounding the central optical zone, and at least two elevations in the outer zone at both sides of a mirror line of said contact lens.

*Fig 1*

*Fig 2*

# Fig 3

# Fig 4

## Fig 5

## Fig 6

*Fig 7*

*Fig 8*

*Fig 9*

Fig 10

Fig 11

Fig 12

## Fig 13

1

23

14

## Fig 14

1

24

14

**European Patent Office**

**EUROPEAN SEARCH REPORT**

Application Number

EP 06 11 6967

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 626 534 B1 (DIMARTINO ROBERT B [US]) 30 September 2003 (2003-09-30) * figure 2 * | 1-12 | INV. G02C7/04 |
| X | WO 89/07281 A (NEWMAN STEVE [AU]; PHILLIPS ANTHONY [AU]) 10 August 1989 (1989-08-10) * figure 1 * | 1-12 | |
| D,A | WO 92/22845 A (NEWMAN, STEVE) 23 December 1992 (1992-12-23) * claims * | 1-12 | |
| D,A | WO 97/16760 A (PROCORNEA HOLDING B.V; WANDERS, BERNARDUS, FRANCISCUS, MARIA) 9 May 1997 (1997-05-09) * the whole document * | 1-12 | |
| D,A | WO 2004/011989 A (NOVARTIS AG; NOVARTIS PHARMA GMBH; LINDACHER, JOSEPH, MICHAEL; HALL, J) 5 February 2004 (2004-02-05) * page 10, paragraph 5 - page 11, paragraph 1 * | 1-12 | TECHNICAL FIELDS SEARCHED (IPC) G02C |

The present search report has been drawn up for all claims

| Place of search | Date of completion of the search | Examiner |
|---|---|---|
| The Hague | 24 November 2006 | Quertemont, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 6967

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2006

| Patent document cited in search report | | Publication date | Patent family member(s) | | Publication date |
|---|---|---|---|---|---|
| US 6626534 | B1 | 30-09-2003 | NONE | | |
| WO 8907281 | A | 10-08-1989 | NONE | | |
| WO 9222845 | A | 23-12-1992 | AT | 225524 T | 15-10-2002 |
| | | | CA | 2111466 A1 | 23-12-1992 |
| | | | DE | 69232796 D1 | 07-11-2002 |
| | | | DE | 69232796 T2 | 24-07-2003 |
| | | | DK | 589959 T3 | 10-02-2003 |
| | | | EP | 0589959 A1 | 06-04-1994 |
| | | | ES | 2186669 T3 | 16-05-2003 |
| | | | NZ | 243183 A | 28-05-1996 |
| | | | US | 5500695 A | 19-03-1996 |
| WO 9716760 | A | 09-05-1997 | AT | 182693 T | 15-08-1999 |
| | | | AU | 712352 B2 | 04-11-1999 |
| | | | AU | 7343196 A | 22-05-1997 |
| | | | BR | 9611207 A | 30-03-1999 |
| | | | CA | 2236097 A1 | 09-05-1997 |
| | | | DE | 29680953 U1 | 06-11-1997 |
| | | | DE | 69603500 D1 | 02-09-1999 |
| | | | DE | 69603500 T2 | 18-11-1999 |
| | | | EP | 0858613 A1 | 19-08-1998 |
| | | | ES | 2135929 T3 | 01-11-1999 |
| | | | JP | 11514753 T | 14-12-1999 |
| | | | TW | 433470 Y | 01-05-2001 |
| | | | US | 6092899 A | 25-07-2000 |
| | | | US | 6409339 B1 | 25-06-2002 |
| WO 2004011989 | A | 05-02-2004 | AU | 2003263184 A1 | 16-02-2004 |
| | | | CA | 2491460 A1 | 05-02-2004 |
| | | | EP | 1527367 A1 | 04-05-2005 |
| | | | JP | 2005534064 T | 10-11-2005 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0858613 B1
- US 4573775 A1, Bayshore
- US 4854089 A1, Morales
- US 5071244 A1, Ross Richard
- EP 0452549 A1, Woehlk
- EP 0858613 A1, Procornea
- WO 9923527 A1, Bernstein
- WO 0214929 A1, Novartis
- WO 2004011989 A1, Novartis
- WO 2004068214 A1, Novartis
- WO 2004092805 A1, Novartis
- WO 2004104675 A2, Novartis
- WO 2006013101 A2, Novartis
- US 2005099595 A1, Novartis
- US 4324461 A1, Salvatores
- WO 2004104675 A
- WO 2004011989 A, Novartis
- EP 0589959 A